# EUROPÄISCHE PATENTSCHRIFT

(11) **EP 1 500 861 B1**
(45) Veröffentlichungstag und Bekanntmachung des Hinweises auf die Patenterteilung: **26.11.2008**
(21) Anmeldenummer: 04014427.1
(22) Anmeldetag: 19.06.2004
(51) Int. Cl.: F16L 37/088, F16L 37/14

(54) **Steckverbindung**
Plug-in connection
Raccord enfichable

(30) Priorität: 24.07.2003 DE 10333686
(43) Veröffentlichungstag der Anmeldung: 26.01.2005
(73) Patentinhaber: Volkswagen Aktiengesellschaft, 38436 Wolfsburg (DE)
(72) Erfinder: Krieger, Ewald, 38528 Adenbüttel (DE); Arens, Günther, 38518 Gifhorn (DE); Schröder, Andreas, 38536 Meinersen (DE)

(56) Entgegenhaltungen:
- EP-A- 0 875 708
- DE-A1- 10 055 348
- US-A- 4 768 587
- US-A- 5 730 481

## Beschreibung

Die Erfindung betrifft eine Steckverbindung zur formschlüssigen Verbindung von Rohr- oder Schlauchleitungen, insbesondere für Ladeluftleitungen einer Brennkraftmaschine, mit zwei Kupplungselementen, wobei das erste Kupplungselement zumindest einen radialen Vorsprung aufweist, welcher in der Funktionsstellung der Steckverbindung in das zweite Kupplungselement hineinreicht und mittels einer Sicherungsklammer axial formschlüssig festlegbar ist.

Aus der EP 0 875 708 A1 ist eine Steckverbindung zur formschlüssigen Verbindung von zwei Kupplungselementen bekannt, wobei das erste Kupplungselement in der Funktionsstellung dieser Steckverbindung in das zweite Kupplungselement hinein ragt und mit einer Sicherungsklammer axial formschlüssig festlegbar ist. Eine radiale Verschiebung der Sicherungsklammer in die Funktionsstellung ist ausschließlich in der unverfomten Stellung dieser Sicherungsklammer möglich.

Aus der US-PS 4,768,587 ist es bekannt, einen mit einer umlaufenden Wulst versehenen Rohrstutzen in eine Aufnahme eines Kühlers so einzustecken, dass die Wulst eine Gummidichtung axial verpesst, wobei nach dem Einstecken des Rohres in den Stutzen auf der anderen Seite dieses Wulstes eine Sicherungsklammer quer durch die Aufnahme gesteckt wird, um im Betrieb dauerhaft einen dichtenden Sitz der Wulst gegen die Gummidichtung zu gewährleisten.

Eine weitere Steckverbindung zur formschlüssigen Verbindung von Rohr- und Schlauchleitungen ist beispielsweise durch die DE 196 01 667 A1 bekannt. Diese Steckverbindung besteht im Wesentlichen aus einer in die Schlauchinnenseite eingeschobenen Innenhülse und einer mit dieser verbundenen, auf die Schlauchoberseite aufgeschobenen Außenhülse, die gemeinsam ein erstes Kupplungselement bilden. Auf die Außenhülse des ersten Kupplungselementes wird ein Rohrstutzen des zweiten Kupplungselementes aufgeschoben und mit einer federnden Sicherungsklammer lagegesichert. Hierzu hat die Außenhülse zwei als Nasen ausgeführte Vorsprünge, in die sich die u-förmig gebogene Rastfeder mit ihren beiden freien Enden in jeweils einen Durchbruch einer Nase einlegt.

Die DE 197 40 649 A1 beschreibt bereits eine Steckverbindung mit einer Innenhülse und einer Außenhülse, welche zwischen sich eine Rohr- oder Schlauchleitung aufnehmen, sowie mit einem Rohrstutzen, der über die Außenhülse geschoben werden kann und mit Hilfe eines Sicherungsmittels mit der Außenhülse verrastbar ist. Um den zwischen Innenhülse und Außenhülse gehaltenen Schlauch zusätzlich gegen Abziehen zu sichern, ist vorgesehen, dass mindestens am freien, offenen Ende der Innenhülse ein Versteifungsrand angeordnet ist.

Die Verbindung zwischen der Innenhülse und der Außenhülse kann gemäß der DE 197 43 825 A1 auch materialeinstückig ausgeführt sein.

Ferner betrifft auch die DE 44 34 412 A1 eine Steckverbindung, insbesondere eine Schlauchkupplung für Anschlüsse im Kraftfahrzeug-Bereich, bestehend aus zwei Kupplungselementen, die jeweils ein Schlauchanschlussteil, einen Dichtring aus elastomeren Werkstoff, der in der Stecknut des einen Kupplungselementes angeordnet ist, und ein Einrastelement besitzen. Jedes Kupplungselement weist eine Kolbenkammer auf, die einen Kolben mit integrierter Feder aufnimmt, die von einem ringförmigen Dichtkörper aus elastomerem Werkstoff umgeben ist. Die beiden Kupplungselemente weisen eine axiale Überschneidung auf.

Als nachteilig hat es sich bei allen bisher bekannten Steckverbindungen erwiesen, dass in der Praxis eine fehlerhafte Montage nicht ausgeschlossen ist. Insbesondere kommt es vor, dass die Sicherungsklammer nicht wie vorgesehen hinter dem Vorsprung in der vorbestimmten Funktionsstellung positioniert wird, sondern in ihrer elastisch verformten Stellung auf dem Vorsprung aufliegt. Die Sicherungsfunktion ist dadurch jedoch nicht zuverlässig gewährleistet. Vielmehr kommt es dabei allenfalls zu einer kraftschlüssigen und dadurch nur eingeschränkt belastbaren Verbindung. Erschwerend kommt hinzu, dass die ordnungsgemäße Funktionsstellung der Sicherungsklammer bzw. mögliche Abweichungen nur unzureichend visuell überprüfbar sind, so dass die fehlerhafte Montage oftmals unbemerkt bleibt.

Vor diesem Hintergrund liegt der Erfindung die Aufgabe zugrunde, eine Steckverbindung der eingangs genannten Art derart auszuführen, durch die Montagefehler weitgehend vermieden werden können. Insbesondere soll dabei zusätzlich eine einfache visuelle Prüfung der Verbindung ermöglicht werden.

Diese Aufgabe wird gelöst mit einer Steckverbindung gemäß den Merkmalen des Patentanspruchs 1. Die Unteransprüche betreffen besonders zweckmäßige Weiterbildungen der Erfindung.

Erfindungsgemäß ist also eine Steckverbindung vorgesehen, mit einer der Sicherungsklammer zugeordneten Führung, durch die eine radiale Verschiebung der Sicherungsklammer in die Funktionsstellung ausschließlich in ihrer unverformten Stellung möglich ist. Hierdurch könnten Montagefehler dadurch weitgehend vermieden werden, dass Endabschnitte der Sicherungsklammer in eine Aufnahme der Führung eingreifen und die Sicherungsklammer daher in ihrer durch den Vorsprung verformten Stellung nicht in die Funktionsstellung verschoben werden kann. Vielmehr ist die Sicherungsklammer nur dann verschiebbar, wenn die vorbestimmte Funktionsstellung in axialer Richtung hinter dem Vorsprung erreicht ist. Die so erreichte Fixierung ist zudem in einfacher Weise visuell von dem Bediener überprüfbar, weil die Sicherungsklammer anderenfalls über den Umfang radial vorsteht. Die Sicherungsklammer kann zu diesem Zweck elastisch verformbar sein, um so das Einführen des ersten Kupplungselementes mit dem radialen Vorsprung durch eine elastische Verformung zu ermöglichen. Ebenso eigenen sich jedoch auch solche Sicherungsklammern, die nicht verformbar ausgeführt sind. In beiden Fällen wird die Funktionsstellung ausschließlich durch die radiale Verschiebung der Sicherungsklammer erreicht.

Erfindungsgemäß weist die Führung jeweils eine Aufnahme für Endabschnitte der Sicherungsklammer auf. . Hierbei ist die Aufnahme derart ausgeführt, dass lediglich die radiale Verschiebung der unverformten Sicherungsklammer ermöglicht wird, während eine insbesondere durch den Vorsprung verformte Sicherungsklammer beispielsweise gegen einen als Randbereich der Aufnahme ausgeführten Anschlag stößt und dadurch die radiale Verschiebung verhindert.

Dabei erweist es sich als besonders praxisgerecht, wenn die Führung die Endabschnitte der Sicherungsklammer radial einschließt. Hierdurch wird eine Verformung der Sicherungsklammer in ihrer Funktionsstellung, insbesondere verursacht durch Krafteinwirkungen im Betrieb oder durch Umgebungseinflüsse, vermieden. Zu diesem Zweck bildet die Führung eine auf den jeweiligen Endabschnitt der Sicherungsklammer abgestimmte Tasche, welche den Endabschnitt radial formschlüssig fixiert.

Eine andere besonders günstige Ausgestaltung wird auch dann erreicht, wenn die Steckverbindung eine die relative Winkelstellung der Kupplungselemente zur Längsachse festlegende Ausformung aufweist. Hierdurch ist eine fehlerhafte relative Position der Sicherungsklammer gegenüber dem radialen Vorsprung ausgeschlossen, weil die beiden Kupplungselemente nur in einer einzigen, durch die Ausformung festgelegten Position verbunden werden können.

Hierzu eignet sich eine Ausführungsform der Erfindung besonders gut, wenn zumindest eines der beiden Kupplungselemente eine Längsrippe und das andere Kupplungselement eine der Längsrippe zugeordnete Aussparung aufweist. Die Längsrippe und die zugeordnete Aussparung können hierzu beispielsweise am Umfang der Kupplungselemente angeordnet sein und mit Abschrägungen zum leichteren Einführen ausgestattet sein. Weiterhin können die Längsrippe und die Aussparung auch in axialer Wirkrichtung außerhalb des dichtenden Verbindungsbereiches angeordnet sein.

Eine andere besonders vorteilhafte Weiterbildung der Erfindung wird auch dadurch erreicht, dass zumindest eines der Kupplungselemente einer Schlauchleitung angespritzt ist, um dadurch möglichen Montagefehlern bei der Verbindung der Schlauchleitung mit dem Kupplungselement vorzubeugen.

Weiterhin wird eine besonders praxisgerechte Abwandlung dann erreicht, wenn die beiden Kupplungselemente einander in axialer Richtung überdecken, um auf diese Weise eine optimale Abdichtung gegenüber äußeren Einflüssen zu erreichen. Der so geschaffene Überdeckungsbereich bildet nach dem Prinzip einer Labyrinthdichtung einen wirkungsvollen Schutz gegen Schmutz- und Staubpartikel, die anderenfalls zu Schäden an der Brennkraftmaschine führen können.

Weiterhin ist eine besonders zweckmäßige Ausgestaltung der Erfindung auch dann erreicht, wenn die Sicherungsklammer eine radiale Formsteifigkeit aufweist, durch die im gewöhnlichen Montage- oder Betriebskräfte eine radiale Verformung ausgeschlossen ist. Hierdurch kann das Ineinanderfügen der beiden Kupplungselemente nur dann vorgenommen werden, wenn sich die Sicherungsklammer in ihrer Ruhestellung befindet. Eine durch den Vorsprung bedingte Verformung ist somit ausgeschlossen, so dass die radiale Verschiebung in einem separaten Arbeitsgang nach der Verbindung der Kupplungselemente vorgenommen werden kann. Eine fehlerhafte bzw. unpräzise Fixierung ist dadurch ausgeschlossen.

Das zweite Kupplungselement weist insbesondere zumindest eine der Sicherungsklammer zugeordnete Durchbrechung an ihrem Umfang auf, durch welche die Sicherungsklammer die freie Querschnittsfläche derart begrenzt, dass das darin mit seinem Vorsprung eingesetzte erste Kupplungselement axial fixiert ist und dadurch ein unbeabsichtigtes oder gewaltsames Lösen der Verbindung weitgehend vermieden werden kann.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in

Fig. 1: eine erfindungsgemäße Steckverbindung in einer geschnittenen Seitenansicht.

Fig. 2: eine perspektivische Darstellung der in Figur 1 gezeigten Steckverbindung.

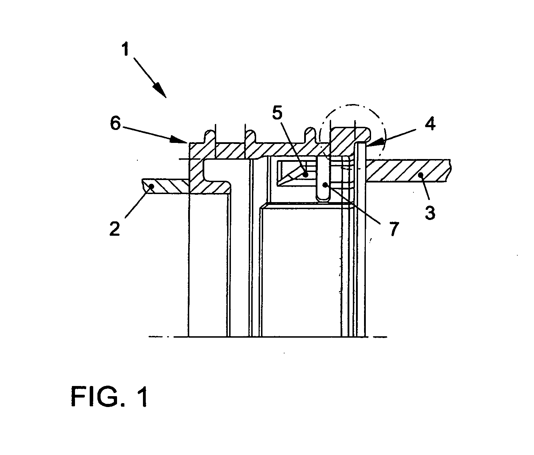

Figur 1 zeigt eine Steckverbindung 1 zur formschlüssigen Verbindung einer lediglich abschnittsweise gezeigten Rohrleitung 2 mit einer ebenfalls nur abschnittsweise gezeigten Schlauchleitung 3, die als Ladeluftleitungen einer Brennkraftmaschine dienen. Hierzu weist ein erstes, der Schlauchleitung 3 zugeordnetes Kupplungselement 4 zumindest einen radialen Vorsprung 5 auf, welcher in der gezeigten Funktionsstellung der Steckverbindung 1 in ein zweites Kupplungselement 6 hineinreicht und dort mittels einer Sicherungsklammer 7 axial festgelegt ist. Die beiden Kupplungselemente 4, 6 überdecken einander in axialer Richtung derart, dass eine zuverlässige Abdichtung gegenüber Umgebungseinflüssen erreicht wird.

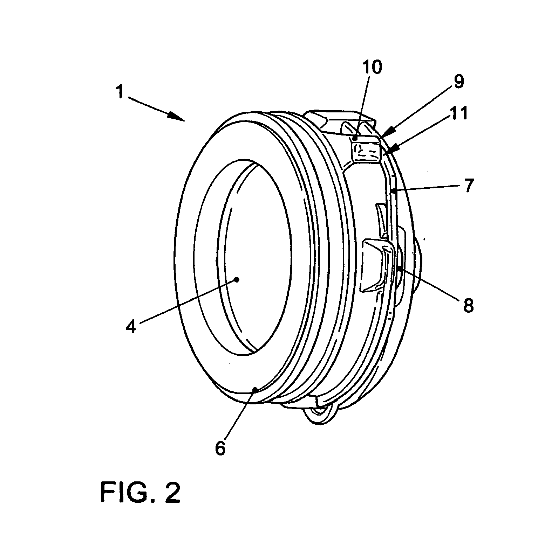

Figur 2 zeigt eine perspektivische Darstellung der in Figur 1 gezeigten Steckverbindung 1. Zu erkennen ist eine der Sicherungsklammer 7 zugeordnete Durchbrechung 8 am Umfang des zweiten Kupplungselementes 6, durch welche die Sicherungsklammer 7 in die freie Querschnittsfläche hineinreicht und dadurch das darin eingesetzte erste Kupplungselement 4 axial fixiert. Hierzu hat die Steckverbindung 1 eine der Sicherungsklammer 7 zugeordnete Führung 9, durch die eine radiale Verschiebung der Sicherungsklammer 7 ausschließlich in ihrer unverformten Stellung möglich ist. Die Führung 9 weist dabei eine Aufnahme 10 für Endabschnitte 11 der Sicherungsklammer 7 auf, durch welche die Sicherungsklammer 7 radial eingeschlossen ist. Dadurch wird einerseits eine fehlerhafte Montage der Sicherungsklammer 7, beispielsweise in ihrer durch den in Figur 1 gezeigten Vorsprung 5 verformten Stellung verhindert und zugleich ein unbeabsichtigtes Abgleiten der Sicherungsklammer 7 bzw. eine Verformung unter dem Einfluss äußerer Kräfte vermieden.

## Patentansprüche

1. Steckverbindung (1) zur formschlüssigen Verbindung von Rohr- oder Schlauchleitungen (2, 3) insbesondere für Ladeluftleitungen einer Brennkraftmaschine, mit zwei Kupplungselementen (4, 6), wobei das erste Kupplungselement (4) in der Funktionsstellung der Steckverbindung (1) in das zweite Kupplungselement (6) hineinreicht und mit einer Sicherungsklammer (7) axial formschlüssig festlegbar ist, wobei eine radiale Verschiebung der Sicherungsklammer (7) in die Funktionsstellung ausschließlich in ihrer unverformten Stellung möglich ist, **gekennzeichnet durch** eine am Umfang des zweiten Kupplungselementes (6) angeordnete Führung (9) für die Sicherungsklammer (7), wobei die Führung (9) eine Durchbrechung (8) derart aufweist, dass die Sicherungsklammer (7) in Funktionsstellung in die freie Querschnittsfläche hineinragt und **dadurch** zumindest ein radialer Vorsprung (5) des ersten Kupplungselmentes (4) den axialen Formschluss bereitstellt, wobei die Führung (9) jeweils eine Aufnahme (10) für Endabschnitte (11) der Sicherungsklammer (7) aufweist.

2. Steckverbindung (1) nach den Anspruch 1, **dadurch gekennzeichnet, dass** die Führung (9) die Endabschnitte (11) der Sicherungsklammer (7) radial einschließt.

3. Steckverbindung (1) nach zumindest einem der vorangehenden Ansprüche, **dadurch gekennzeichnet, dass** die Steckverbindung (1) eine die relative Winkelstellung der Kupplungselemente (4, 6) zur Längsachse festlegende Ausformung aufweist.

4. Steckverbindung (1) nach zumindest einem der vorangehenden Ansprüche, **dadurch gekennzeichnet, dass** zumindest eines der beiden Kupplungselemente (4, 6) eine Längsrippe und das andere Kupplungselement (4, 6) eine der Längsrippe zugeordnete Aussparung aufweist.

5. Steckverbindung (1) nach zumindest einem der vorangehenden Ansprüche, **dadurch gekennzeichnet, dass** zumindest eines der Kupplungselemente (4) einer Schlauchleitung (3) angespritzt ist.

6. Steckverbindung (1) nach zumindest einem der vorangehenden Ansprüche, **dadurch gekennzeichnet, dass** die beiden Kupplungselemente (4, 6) einander in axialer Richtung überdecken.

7. Steckverbindung (1) nach zumindest einem der vorangehenden Ansprüche, **dadurch gekennzeichnet, dass** die Sicherungsklammer (7) eine radiale Formsteifigkeit aufweist, durch die bei gewöhnlichen Montage- oder Betriebskräften eine radiale Verformung ausgeschlossen ist.

## Claims

1. Plug-in connection (1) for the form-fitting connection of pipe or hose lines (2, 3), in particular for charge-air lines of an internal combustion engine, having two coupling elements (4, 6), wherein in the functional position of the plug-in connection (1), the first coupling element (4) extends into the second coupling element (6) and can be fixed in an axially form-fitting manner by means of a securing clip (7), wherein the securing clip (7) can be moved radially into the functional position only when it is in its non-deformed position, **characterized by** a guide (9), which is arranged on the periphery of the second coupling element (6), for the securing clip (7), wherein the guide (9) has an aperture (8) in such a way that the securing clip (7), when it is in the functional position, projects into the free cross-sectional area, and as a result, at least one radial projection (5) of the first coupling element (4) provides the axial form-fitting action, wherein the guide (9) has in each case one receptacle (10) for end sections (11) of the securing clip (7).

2. Plug-in connection (1) according to Claim 1, **characterized in that** the guide (9) radially encloses the end sections (11) of the securing clip (7).

3. Plug-in connection (1) according to at least one of the preceding claims, **characterized in that** the plug-in connection (1) has a moulding which defines the relative angular position of the coupling elements (4, 6) with respect to the longitudinal axis.

4. Plug-in connection (1) according to one of the preceding claims, **characterized in that** at least one of the two coupling elements (4, 6) has a longitudinal rib and the other coupling element (4, 6) has a cutout which is assigned to the longitudinal rib.

5. Plug-in connection (1) according to at least one of the preceding claims, **characterized in that** at least one of the coupling elements (4) is integrally injection-moulded on a hose line (3).

6. Plug-in connection (1) according to at least one of the preceding claims, **characterized in that** the two coupling elements (4, 6) overlap one another in the axial direction.

7. Plug-in connection (1) according to at least one of the preceding claims, **characterized in that** the securing clip (7) has a degree of radial dimensional stability which prevents a radial deformation under normal assembly or operating forces.

## Revendications

1. Raccord enfichable (1) pour la connexion par engagement positif de conduites de tubes ou de tuyaux (2, 3), en particulier pour des conduites d'air de suralimentation d'un moteur à combustion interne, comprenant deux éléments d'accouplement (4, 6), le premier élément d'accouplement (4) pénétrant dans le deuxième élément d'accouplement (6) dans la position fonctionnelle du raccord enfichable (1), et pouvant être fixé par engagement positif axialement à une pince de fixation (7), un déplacement radial de la pince de fixation (7) dans la position fonctionnelle étant possible exclusivement dans sa position non déformée, **caractérisé en ce que** par un guide (9) disposé sur la périphérie du deuxième élément d'accouplement (6), pour la pince de fixation (7), le guide (9) présentant un orifice (8) de telle sorte que la pince de fixation (7) pénètre dans la surface libre en section transversale dans la position fonctionnelle et que de ce fait au moins une saillie radiale (5) du premier élément d'accouplement (4) assure la connexion par engagement positif axiale, le guide (9) présentant à chaque fois un logement (10) pour des portions d'extrémité (11) de la pince de fixation (7).

2. Raccord enfichable (1) selon la revendication 1, **caractérisé en ce que** le guide (9) enserre radialement les portions d'extrémité (11) de la pince de fixation (7).

3. Raccord enfichable (1) selon au moins l'une quelconque des revendications précédentes, **caractérisé en ce que** le raccord enfichable (1) présente une formation établissant la position angulaire relative des éléments d'accouplement (4, 6) par rapport à l'axe longitudinal.

4. Raccord enfichable (1) selon au moins l'une quelconque des revendications précédentes, **caractérisé en ce qu'**au moins l'un des deux éléments d'accouplement (4, 6) présente une nervure longitudinale et l'autre élément d'accouplement (4, 6) présente un évidement associé à la nervure longitudinale.

5. Raccord enfichable (1) selon au moins l'une quelconque des revendications précédentes, **caractérisé en ce qu'**au moins l'un des éléments d'accouplement (4) d'une conduite de tuyau (3) est moulé par injection.

6. Raccord enfichable (1) selon au moins l'une quelconque des revendications précédentes, **caractérisé en ce que** les deux éléments d'accouplement (4, 6) se recouvrent mutuellement dans la direction axiale.

7. Raccord enfichable (1) selon au moins l'une quelconque des revendications précédentes, **caractérisé en ce que** la pince de fixation (7) présente une rigidité de forme radiale, qui exclut toute déformation radiale sous l'effet des forces de montage ou de fonctionnement usuelles.
